# EUROPEAN PATENT APPLICATION

(11) **EP 4 663 334 A1**
(43) Date of publication of application: **17.12.2025**
(21) Application number: 23921370.5
(22) Date of filing: 21.12.2023
(51) Int. Cl.: B23K 26/046, B23K 26/00, B23K 26/24, B23K 26/60

(54) **WELDING METHOD, WELDING SYSTEM, AND CORRECTING METHOD**

(30) Priority: 09.02.2023 JP 2023018276
(71) Applicant: TOYOTA JIDOSHA KABUSHIKI KAISHA, Toyota-shi Aichi 471-8571 (JP)
(72) Inventor: YAMAMOTO, Takeshi, Toyota-shi, Aichi 471-8571 (JP); MATSUO, Ryuta, Toyota-shi, Aichi 471-8571 (JP)
(74) Representative: J A Kemp LLP
(86) International application number: PCT/JP2023/045888
(87) International publication number: WO 2024/166552

(57) **Abstract**

A welding method according to the present disclosure includes a step of applying laser light (L1) for inspection obliquely to a workpiece (W) while changing an amount of defocus, a step of determining a correction value for the amount of defocus based on intensity of return light (L2) of the laser light (L1) for inspection, and a step of welding the workpiece (W) by applying laser light for welding to the workpiece (W) so that the amount of defocus corrected by the correction value becomes zero. In the welding method, the laser light (L1) for inspection is scanned in a direction approaching an emission point at a timing at which the amount of defocus becomes zero. As a result, a welding method, a welding system (100), and a correction method capable of improving the accuracy of the control of the focusing of laser light for welding are provided.

## Description

### Technical Field

The present disclosure relates to a welding method, a welding system, and a method for correcting an amount of defocus.

### Background Art

Patent Literature 1 discloses an inspection method for inspecting defocusing of laser light used for welding. In the inspection method disclosed in Patent Literature 1, laser light for inspection is applied perpendicularly to a workpiece, and the laser light for inspection is scanned. Then, the defocusing of the laser light is inspected based on the intensity of reflected light of the laser light for inspection.

### Citation List

### Patent Literature

Patent Literature 1: Japanese Unexamined Patent Application Publication No. 2018-140426

### Summary of Invention

The inspection method disclosed in Patent Literature 1 is used for inspecting defocusing of laser light used for laser welding in which the laser light is applied perpendicularly to a workpiece.

Meanwhile, recently, laser welding apparatuses capable of applying laser light while scanning the laser light from a fixed point have been introduced. In such a laser welding apparatus, there are cases where when defocusing of laser light is inspected, it is necessary to apply laser light for inspection obliquely to a workpiece.

The inventors of the present application have found that when defocusing of laser light for inspection is inspected while applying the laser light for inspection obliquely to a workpiece and scanning the laser light for inspection, the accuracy of the inspection changes according to the scanning direction of the laser light for inspection.

That is, the inventors of the present application have found a problem that when it is necessary to apply laser light for inspection obliquely to a workpiece, the accuracy of the control of the focusing of the laser light is not sufficient depending on the scanning direction of the laser light for inspection.

Patent Literature 1 does not disclose any technology capable of solving such a problem.

The present disclosure has been made in order to solve the above-described problem, and an object thereof is to provide a welding method, a welding system, and a correction method capable of improving the accuracy of the control of the focusing of laser light for welding.

A welding method according to an aspect of the present disclosure includes:
a step of applying laser light for inspection obliquely to a workpiece while changing an amount of defocus;
a step of determining a correction value for the amount of defocus based on intensity of return light of the laser light for inspection; and
a step of welding the workpiece by applying laser light for welding to the workpiece so that the amount of defocus corrected by the correction value becomes zero, in which
the laser light for inspection is scanned in a direction approaching an emission point of the laser light for inspection at a timing at which the amount of defocus becomes zero during the step of applying the laser light for inspection to the workpiece.

By the above-described configuration, the amount of change in the return light of the laser light for inspection increases. As a result, the welding method according to an aspect of the present disclosure can improve the accuracy of the control of the focusing of laser light for welding.

In the welding method according to an aspect of the present disclosure, in the step of determining the correction value for the amount of defocus, the amount of defocus of the laser light for inspection obtained at a timing at which the intensity of the return light of the laser light for inspection reaches an extreme value may be determined as the correction value for the amount of defocus.

In the welding method according to an aspect of the present disclosure, in the step of determining the correction value for the amount of defocus, the amount of defocus of the laser light obtained at a timing at which the intensity of the return light of the laser light for inspection reaches a minimum value may be determined as the correction value for the amount of defocus.

In the welding method according to an aspect of the present disclosure, in the step of determining the correction value for the amount of defocus, the amount of defocus of the laser light obtained at a timing at which the intensity of the return light of the laser light for inspection reaches a maximum value may be determined as the correction value for the amount of defocus.

In the welding method according to an aspect of the present disclosure, in the step of applying the laser light for inspection to the workpiece, a trajectory of the scanning of the laser light for inspection may be roughly circular.

In the welding method according to an aspect of the present disclosure, the step of applying the laser light for inspection to the workpiece, the step of determining the correction value for the amount of defocus, and the step of welding the workpiece may be performed at a plurality of points. Further, in the step of applying the laser light for inspection to the workpiece that is performed a second time or after, the laser light for inspection may be scanned in the direction approaching the emission point of the laser light for inspection at a timing at which the amount of defocus of the laser light for inspection corrected by the correction value for the amount of defocus becomes zero.

A welding system according to an aspect of the present disclosure includes:
a laser light irradiation unit configured to applying laser light for inspection and laser light for welding to a workpiece; and
a correction-value determination unit configured to determine a correction value for an amount of defocus based on intensity of return light of the laser light for inspection, in which
the laser light irradiation unit applies the laser light for inspection to the workpiece while changing the amount of defocus, scans the laser light for inspection in a direction approaching an emission point of the laser light for inspection at a timing at which the amount of defocus becomes zero, and applies laser light for welding to the workpiece so that the amount of defocus corrected by the correction value determined by the correction-value determination unit becomes zero.

A correction method according to the present disclosure includes:
a step of applying laser light for inspection to a workpiece while changing an amount of defocus; and
a step of determining a correction value for the amount of defocus based on intensity of return light of the laser light for inspection, in which
in the step of applying the laser light for inspection to the workpiece, the laser light for inspection is scanned in a direction approaching an emission point of the laser light for inspection at a timing at which the amount of defocus becomes zero.

According to the present disclosure, it is possible to provide a welding method, a welding system, and a correction method capable of improving the accuracy of the control of the focusing of laser light for welding light.

### Brief Description of Drawings

Fig. 1 is a block diagram showing a configuration of a welding system according to a first embodiment;
Fig. 2 is a schematic cross-sectional diagram for explaining return light according to the first embodiment;
Fig. 3 is a block diagram showing a configuration of a control unit 2 according to the first embodiment;
Fig. 4 is a schematic cross-sectional diagram for explaining the effect of the welding system according to the first embodiment;
Fig. 5 is a schematic cross-sectional diagram for explaining the effect of the welding system according to the first embodiment;
Fig. 6 is a graph showing the intensity of return light in the first embodiment;
Fig. 7 is a flowchart showing operations performed by the welding system according to the first embodiment; and
Fig. 8 is a schematic plan view showing a trajectory of the scanning of laser light for inspection according to another embodiment.

### Description of Embodiments

### (First Embodiment)

### <Configuration of Welding System>

A first embodiment according to the present disclosure will be described in detail with reference to the drawings.

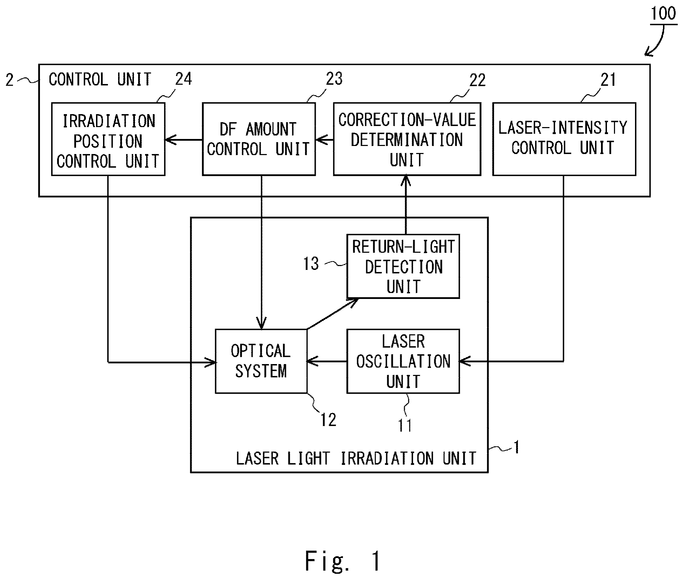

Firstly, a configuration of a welding system according to this embodiment will be described in detail. Fig. 1 is a block diagram for explaining the configuration of the welding system according to the first embodiment.

The welding system 100 according to this embodiment applies laser light for inspection to a workpiece and determines a correction value for an amount of defocus before welding the workpiece. Then, the welding system 100 according to this embodiment welds the workpiece by applying laser light for welding to the workpiece based on the amount of defocus corrected by the determined correction value.

Note that the amount of defocus in this specification is a numerical value representing a difference between the position of the irradiation point of the laser light and that of the focal point of the laser light. The amount of defocus indicates that the larger its absolute value is, the larger the difference between the position of the irradiation point of the laser light and that of the focal point of the laser light is. When the amount of defocus is zero, it indicates that the irradiation point of the laser light coincides with the focal point of the laser light.

The welding system 100 according to this embodiment includes a laser light irradiation unit 1 and a control unit 2.

The laser light irradiation unit 1 applies laser light for inspection and laser light for welding to a workpiece. The laser light irradiation unit 1 is controlled by the control unit 2. The laser light irradiation unit 1 is typically a laser welding apparatus, for example, a laser welding apparatus capable of welding a plurality of points from a fixed point.

The laser light irradiation unit 1 includes a laser oscillation unit 11, an optical system 12, and a return-light detection unit 13.

The laser oscillation unit 11 oscillates, i.e., generates, laser light for inspection and laser light for welding. More specifically, the laser oscillation unit 11 oscillates laser light for inspection and laser light for welding under the control by the control unit 2. Specifically, for example, the wavelength and the intensity of laser light that the laser oscillation unit 11 oscillates, and the timing at which the laser oscillation unit 11 emits laser light are controlled by the control unit 2.

The laser light for inspection and the laser light for welding emitted by the laser oscillation unit 11 are applied to a workpiece through the optical system 12.

Note that the laser light for inspection and the laser light for welding are laser lights that are both applied to the workpiece and have intensities different from each other.

The laser light for welding has laser intensity higher than that of the laser light for inspection, and is applied to the workpiece in the step of performing the welding of the workpiece.

In contrast, the laser light for inspection has laser intensity lower than that of the laser light for welding, and is applied to the workpiece in order to determine a correction value for an amount of defocus before performing the welding of the workpiece.

The optical system 12 applies the laser light, which the laser oscillation unit 11 has oscillated, to the workpiece. More specifically, the optical system 12 applies the laser light to the workpiece while adjusting the irradiation position and the amount of defocus of the laser light, which the laser oscillation unit 11 has oscillated, under the control of the control unit 2.

Further, the optical system 12 guides return light of the laser light for inspection (which will be described later) to the return-light detection unit 13. That is, the return light of the laser light for inspection reaches the return-light detection unit 13 through the optical system 12.

The optical system 12 is typically a galvano-scanner. The optical system 12 typically has an emission point in which a protective glass is fitted, and emits laser light from this emission point to the workpiece. Further, the optical system 12 guides return light incident on this emission point to the return-light detection unit 13.

In particular, the optical system 12 according to this embodiment applies the laser light for inspection obliquely to the workpiece while changing the amount of defocus under the control of the control unit 2. Further, the optical system 12 according to this embodiment welds the workpiece by applying the laser light for welding to the workpiece so that the amount of defocus corrected by a correction value (which will be described later) becomes zero under the control of the control unit 2.

The optical system 12 is implemented by, for example, a combination of a protective glass, a lens, a reflecting mirror, and a position adjusting mechanism for adjusting their positions.

The optical system 12 may control the irradiation position of the laser light, which the laser oscillation unit 11 has oscillated, by controlling, for example, the position and the angle of the reflecting mirror. Further, the optical system 12 may control the amount of defocus of the laser light, which the laser oscillation unit 11 has oscillated, by controlling the position of the lens.

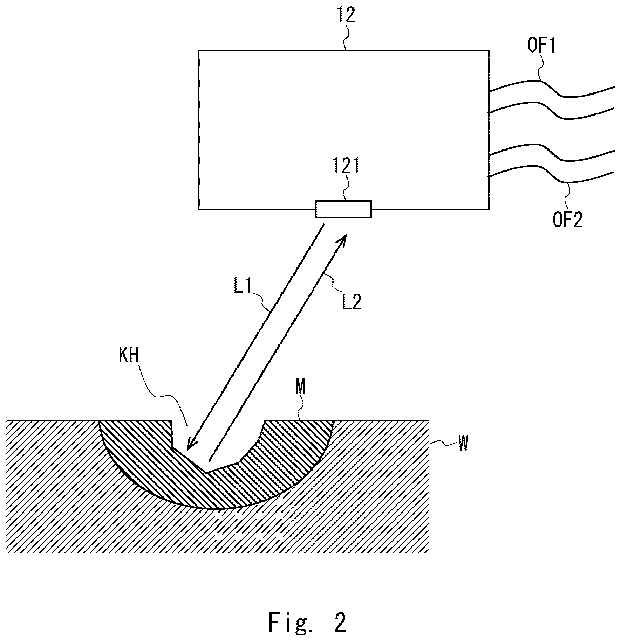

Fig. 2 is a schematic cross-sectional diagram for explaining return light in the first embodiment. Fig. 2 shows the optical system 12, the laser light L1 for inspection (hereinafter also referred to as inspection laser light L1), the return light L2, and the workpiece W.

The optical system 12 shown in Fig. 2 is connected to the laser oscillation unit 11 through an optical fiber OF1, and also connected to the return-light detection unit 13 through an optical fiber OF2.

Further, a protective glass 121 for protecting the internal structure of the optical system 12 from sputtering caused by welding is provided in the emission point from which the optical system 12 emits laser light.

The inspection laser light L1 is emitted from the optical system 12 and applied to the workpiece W. A part of the surface of the workpiece W irradiated with the inspection laser light L1 is melted, so that a molten pool M is formed.

Further, in a part of the molten pool M, a part of the molten pool M is evaporated by the irradiation of the inspection laser light L1, and a keyhole KH, which is a minute hole, is formed.

Reflection and absorption of the inspection laser light L1 occur in the keyhole KH. The deeper the keyhole KH is, the more the absorption amount of the inspection laser light L1 in the keyhole KH increases.

The return light L2 is light that is emitted from the irradiation point of the inspection laser light L1 on the workpiece W and is incident on the emission point of the inspection laser light L1 in the optical system 12. Typically, the return light L2 is reflected light of the inspection laser light L1 reflected at least once in the keyhole KH. Alternatively, the return light L2 may be thermally radiated light that is generated as a result of the absorption of the inspection laser light L1 in the keyhole KH.

As described above, reflection and absorption of the inspection laser light L1 occur in the keyhole KH, and the absorption amount of the inspection laser light L1 increases as the keyhole KH becomes deeper.

Therefore, in the case where the return light L2 is the reflected light of the inspection laser light L1 reflected in the keyhole KH, the intensity of the return light L2 decreases as the keyhole KH becomes deeper.

In contrast, in the case where the return light L2 is thermally radiated light that is generated as a result of the absorption of the inspection laser light L1 in the keyhole KH, the intensity of the return light L2 increases as the keyhole KH becomes deeper.

Note that the absorption amount of the inspection laser light L1 also depends on the amount of defocus, so that the intensity of the return light L2 also depends on the amount of defocus. More specifically, the absorption amount of the inspection laser light L1 increases as the amount of defocus becomes closer to zero, as the irradiation position of the laser light for inspection and the position of the focal point become closer to each other.

Therefore, in the case where the return light L2 is the reflected light of the inspection laser light L1 reflected in the keyhole KH, the intensity of the return light L2 decreases as the amount of defocus becomes closer to zero. In contrast, in the case where the return light L2 is thermally radiated light that is generated as a result of the absorption of the inspection laser light L1 in the keyhole KH, the intensity of the return light L2 increases as the amount of defocus becomes closer to zero.

Note that the welding system 100 according to this embodiment may detect only the reflected light of the inspection laser light L1 as the return light L2, detect only the thermally radiated light that is generated as a result of the absorption of the inspection laser light L1 as the return light L2, or detect both of them as the return light L2.

Further, the welding system 100 according to this embodiment may detect light other than the above-described light as the return light L2. That is, the welding system 100 according to this embodiment may detect any light as the return light as long as it is light that is emitted from the irradiation point of the inspection laser light L1 on the workpiece W and is incident on the emission point of the inspection laser light L1 in the optical system 12.

The description will be given by referring to Fig. 1 again.

The return-light detection unit 13 detects the return light of the laser light for inspection through the optical system 12. The return-light detection unit 13 is typically a light-receiving element and outputs the detected intensity of the return light as an electric signal. The return-light detection unit 13 outputs the detected intensity of the return light to the control unit 2.

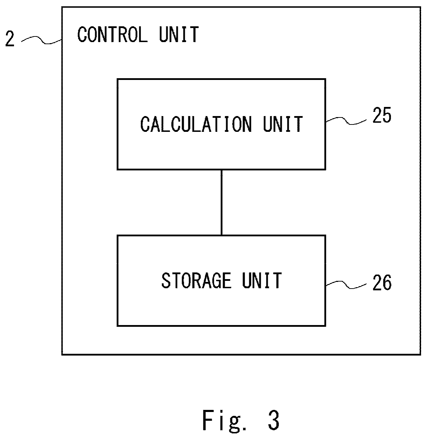

The control unit 2 controls the operation of the laser light irradiation unit 1. Fig. 3 is a block diagram showing the configuration of the control unit 2 according to the first embodiment.

The control unit 2 includes a calculation unit 25 such as a CPU (Central Processing Unit) as shown in Fig. 3, and a storage unit 26 such as a RAM (Random Access Memory) and a ROM (Read Only Memory) in which programs and data for controlling the laser light irradiation unit 1 are stored. That is, the control unit 2 has functions as a computer and controls the laser light irradiation unit 1 based on the aforementioned program.

Therefore, each of the functional blocks constituting the control unit 2 shown in Fig. 1 can be implemented by hardware such as the aforementioned CPU, the storage unit, and other circuits, or can be implemented by software such as the program for controlling the laser light irradiation unit 1, stored in the storage unit 26. That is, the control unit 2 can be implemented in various forms by hardware, software, or a combination thereof.

Note that the program includes a set of instructions (or software codes) that, when loaded onto a computer, causes the computer to perform one or a plurality of functions described in the example embodiments. The program may be stored in a non-transitory computer readable medium or in a physical storage medium. By way of example rather than limitation, the computer readable medium or the physical storage medium may include a random-access memory (RAM), a read-only memory (ROM), a flash memory, a solid-state drive (SSD), or other memory technology, a CD-ROM, a digital versatile disc (DVD), a Blu-ray (Registered Trademark) disc or other optical disc storages, a magnetic cassette, magnetic tape, and a magnetic disc storage or other magnetic storage devices. The program may be transmitted on a transitory computer readable medium or a communication medium. By way of example rather than limitation, the transitory computer readable medium or the communication medium may include electrical, optical, acoustic, or other forms of propagating signals.

The description will be given by referring to Fig. 1 again.

The control unit 2 includes a laser-intensity control unit 21, a correction-value determination unit 22, a DF amount control unit 23, and an irradiation position control unit 24.

The laser-intensity control unit 21 controls the laser oscillation unit 11. More specifically, the laser-intensity control unit 21 controls the wavelength and the intensity of laser light that the laser oscillation unit 11 oscillates, and the timing at which the laser oscillation unit 11 oscillates laser light.

The correction-value determination unit 22 acquires the detected intensity of the return light from the return-light detection unit 13. The correction-value determination unit 22 determines a correction value for the amount of defocus based on the acquired intensity of the return light of the laser light for inspection. The correction-value determination unit 22 outputs the determined correction value to the DF amount control unit 23.

Specifically, the correction-value determination unit 22 specifies the timing at which the intensity of the return light detected by the return-light detection unit 13 reaches an extreme value. Then, the correction-value determination unit 22 acquires, from the DF amount control unit 23, the amount of defocus of the laser light for inspection obtained at the timing at which the intensity of the return light detected by the return-light detection unit 13 reaches the extreme value. The correction-value determination unit 22 determines the acquired amount of defocus as the correction value for the amount of defocus.

More specifically, in the case where the return light is reflected light of the laser light for inspection, the correction-value determination unit 22 determines the amount of defocus of the laser light for inspection obtained at the timing at which the intensity of the return light of the laser light for inspection reaches a minimum value as the correction value for the amount of defocus.

Further, in the case where the return light is thermally radiated light that is generated as a result of the absorption of the laser light for inspection, the correction-value determination unit 22 determines the amount of defocus of the laser light for inspection obtained at the timing at which the intensity of the return light of the laser light for inspection reaches a maximum value as the correction value for the amount of defocus.

That is, the correction-value determination unit 22 according to this embodiment determines the amount of defocus of the laser light for inspection obtained at the timing at which the intensity of the return light of the laser light for inspection reaches the extreme value as the correction value for the amount of defocus.

Note that as described above, in the case where the return light is reflected light of the laser light for inspection, the intensity of the return light decreases as the amount of defocus becomes closer to zero. Further, in the case where the return light is thermally radiated light that is generated as a result of the absorption of the laser light for inspection, the intensity of the return light L2 increases as the amount of defocus becomes closer to zero.

Therefore, the timing at which the intensity of the return light detected by the return-light detection unit 13 reaches the extreme value corresponds to the timing at which the amount of defocus becomes zero, i.e., the timing at which the irradiation point of the laser light for inspection coincides with the focal point thereof.

Note that when there is no error in the optical system 12 at all, the amount of defocus of the laser light for inspection that the correction-value determination unit 22 acquires from the DF amount control unit 23 should become zero.

However, there is some error in the actual optical system 12, the amount of defocus that the correction-value determination unit 22 acquires from the DF amount control unit 23 does not become zero.

That is, the amount of defocus that the correction-value determination unit 22 acquires from the DF amount control unit 23 corresponds to the error of the amount of defocus caused by the error in the optical system 12.

Therefore, by using the amount of defocus of the laser light for inspection obtained at the timing at which the intensity of the return light reaches the extreme value as the correction value for the amount of defocus, the welding system according to this embodiment can properly correct the error in the amount of defocus caused by the error in the optical system 12.

Note that the above-described error in the optical system 12 is caused by various causes. For example, an error occurs by the expansion of the protective lens provided at the emission point of laser light.

The DF amount control unit 23 controls the optical system 12. More specifically, the DF amount control unit 23 controls the optical system 12 and thereby controls the amount of defocus of the laser light emitted from the laser light irradiation unit 1.

For example, the DF amount control unit 23 may control the position of a movable lens provided in the optical system 12 and thereby control the amount of defocus of the laser light emitted from the laser light irradiation unit 1.

Note that in order to control the amount of defocus, the DF amount control unit 23 may acquire position information of the irradiation point of the laser light from the irradiation position control unit 24. Then, the DF amount control unit 23 may calculate a distance between the emission point of the laser light and the irradiation point thereof, and control the amount of defocus of the laser light based on the calculated distance.

When the laser light irradiation unit 1 is emitting the laser light for inspection, the DF amount control unit 23 controls the optical system 12 so that the amount of defocus changes during the period in which the laser light irradiation unit 1 is emitting the laser light for inspection. That is, the DF amount control unit 23 controls the laser light irradiation unit 1 so that it applies the laser light for inspection to the workpiece while changing the amount of defocus thereof.

Note that in this case, the DF amount control unit 23 may change the amount of defocus in such a manner that the focal position moves from the front side of the workpiece to the rear side thereof, or in such a manner that the focal position moves from the rear side of the workpiece to the front side thereof.

Note that the DF amount control unit 23 changes the amount of defocus of the laser light for inspection so that the amount of defocus becomes zero during the period in which the irradiation point of the laser light for inspection is scanned in the direction approaching the emission point of the laser light for inspection.

The DF amount control unit 23 outputs, to the correction-value determination unit 22, the amount of defocus of the laser light for inspection obtained at the timing at which the intensity of the return light reaches the extreme value. Further, the DF amount control unit 23 acquires the correction value for the amount of defocus from the correction-value determination unit 22.

When the laser light irradiation unit 1 is emitting the laser light for welding, the DF amount control unit 23 controls the optical system 12 so that the amount of defocus corrected by the correction value acquired from the correction-value determination unit 22 becomes zero during the period in which the laser light irradiation unit 1 is emitting the laser light for welding.

The irradiation position control unit 24 controls the optical system 12. More specifically, the irradiation position control unit 24 controls the optical system 12 and thereby controls the position of the irradiation point of the laser light emitted from the laser light irradiation unit 1.

For example, the DF amount control unit 23 may control the angle of a reflecting mirror provided in the optical system 12 and thereby control the position of the irradiation point of the laser light emitted from the laser light irradiation unit 1.

When the laser light irradiation unit 1 is emitting the laser light for inspection, the irradiation position control unit 24 controls the optical system 12 so as to scan the laser light for inspection in the direction approaching the emission point of the laser light for inspection at the timing at which the amount of defocus of the laser light for inspection becomes zero.

### <Effect of Welding System>

It is considered that, by the above-described configuration, the accuracy of the control of the focusing of the laser light for welding is improved on the following hypothesis. However, the present disclosure is not limited by the following hypothesis.

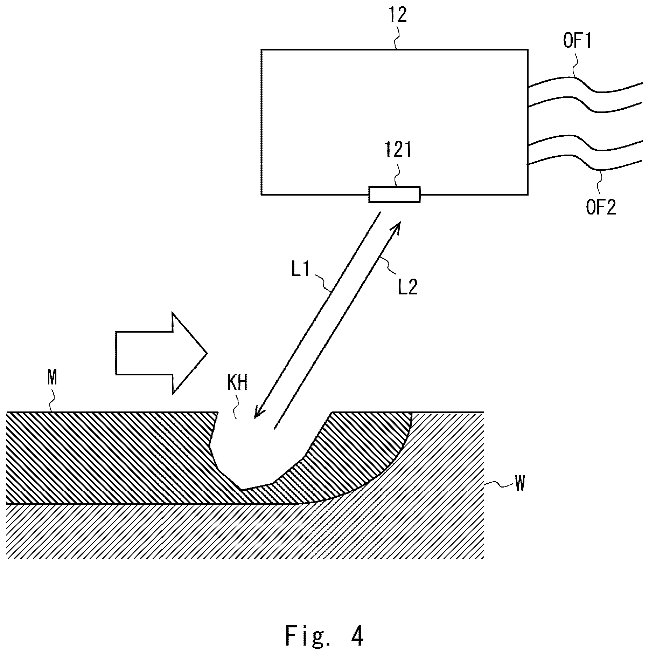

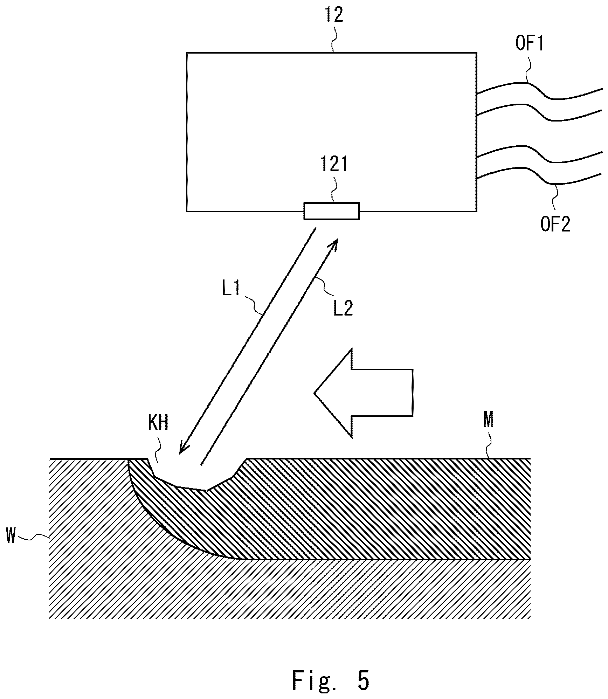

Figs. 4 and 5 are schematic cross-sectional diagrams for explaining the effect of the welding system according to the first embodiment.

More specifically, Fig. 4 is a schematic cross-sectional diagram showing the optical system 12, the inspection laser light L1, the return light L2, and the workpiece W when the laser light irradiation unit 1 is scanning the laser light for inspection in the direction approaching the emission point of the laser light for inspection.

Further, Fig. 5 is a schematic cross-sectional diagram showing the optical system 12, the inspection laser light L1, the return light L2, and the workpiece W when the laser light irradiation unit 1 is scanning the laser light for inspection in the direction receding from the emission point of the laser light for inspection.

As shown in Fig. 4, when the laser light irradiation unit 1 is scanning the laser light for inspection in the direction approaching the emission point of the laser light for inspection, the inspection laser light L1 is incident in the direction in which the molten pool M is being formed. In contrast, as shown in Fig. 5, when the laser light irradiation unit 1 is scanning the laser light for inspection in the direction receding from the emission point of the laser light for inspection, the inspection laser light L1 is incident in the direction in which the molten pool M is not being formed.

Note that when the part where the molten pool M is formed on the workpiece W is compared with the part where the molten pool M is formed thereon, the temperature of the part where the molten pool M is formed is higher and hence the evaporation of the metal is more likely to occur there.

Therefore, when the case where the laser light is incident in the direction in which the molten pool M is being formed is compared with the case where the laser light is incident in the direction in which the molten pool M is being formed, a deeper keyhole KH is formed in the case where the laser light is incident in the direction in which the molten pool M is being formed.

That is, when the case where the laser light for inspection is scanned in the direction approaching the emission point of the laser light for inspection is compared with the case where the laser light for inspection is scanned in the direction receding from the emission point of the laser light for inspection, a deeper keyhole KH is formed in the case where the laser light for inspection is scanned in the direction approaching the emission point of the laser light for inspection as shown in Figs. 4 and 5.

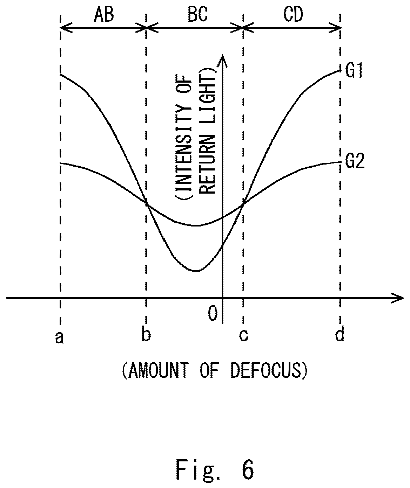

Fig. 6 is a graph showing the intensity of return light in the first embodiment. More specifically, in Fig. 6, a graph G1 and a graph G2 are superimposed on each other.

The graph G1 is a graph showing the case where the laser light for inspection is scanned in the direction approaching the emission point of the laser light for inspection at the timing at which the amount of defocus becomes zero.

Further, the graph G2 is a graph showing the case where the laser light for inspection is scanned in the direction receding from the emission point of the laser light for inspection at the timing at which the amount of defocus becomes zero.

That is, the graph G1 is an example of a graph showing the intensity of the return light observed by the welding system 100 according to this embodiment, and the graph G2 is a comparative example.

More specifically, each of the graphs G1 and G2 is a graph in which the intensity of return light is plotted over a range of the amount of defocus, and shows changes in the intensity of the return light when the amount of defocus is changed from a to d.

Note that in the graph G1, the laser light for inspection is scanned in the direction receding from the emission point in a section AB in which the amount of defocus is changed from a to b, and the laser light for inspection is scanned in the direction approaching the emission point in a section BC in which the amount of defocus is changed from b to c. Further, the laser light for inspection is scanned in the direction receding from the emission point in a section CD in which the amount of defocus is changed from c to d.

Meanwhile, in the graph G2, the laser light for inspection is scanned in the direction approaching the emission point in the section AB in which the amount of defocus is changed from a to b, and the laser light for inspection is scanned in the direction receding from the emission point in the section BC in which the amount of defocus is changed from b to c. Further, the laser light for inspection is scanned in the direction approaching the emission point in the section CD in which the amount of defocus is changed from c to d.

As described above, in the case where the return light L2 is the reflected light of the inspection laser light L1 reflected in the keyhole KH, the intensity of the return light decreases as the keyhole becomes deeper.

Therefore, when the case where the laser light for inspection is scanned in the direction approaching the emission point of the laser light for inspection is compared with the case where the laser light for inspection is scanned in the direction receding from the emission point of the laser light for inspection, the intensity of the return light decreases more in the case where the laser light for inspection is scanned in the direction approaching the emission point of the laser light for inspection.

Therefore, as shown in Fig. 6, in the sections AB and CD, the intensity of the return light is larger in the graph G1 than in the graph G2. Further, in the section BC, the intensity of the return light is smaller in the graph G1 than in the graph G2.

As a result, as shown in Fig. 6, the change in the vertical axis direction in the graph G1 is larger than in the graph G2. The larger the change in the vertical axis direction of the graph is, the more the accuracy for specifying the extreme value improves. Therefore, the extreme value can be specified more accurately by specifying the extreme value using the graph G1 than using the graph G2.

That is, in the welding system according to this embodiment, the accuracy for specifying the extreme value of the intensity of the return light increases by scanning the laser light for inspection in the direction approaching the emission point at the timing at which the amount of defocus becomes zero. As a result, the welding system according to this embodiment can improve the accuracy of the control of the focusing of the laser light.

### <Operation of Welding System>

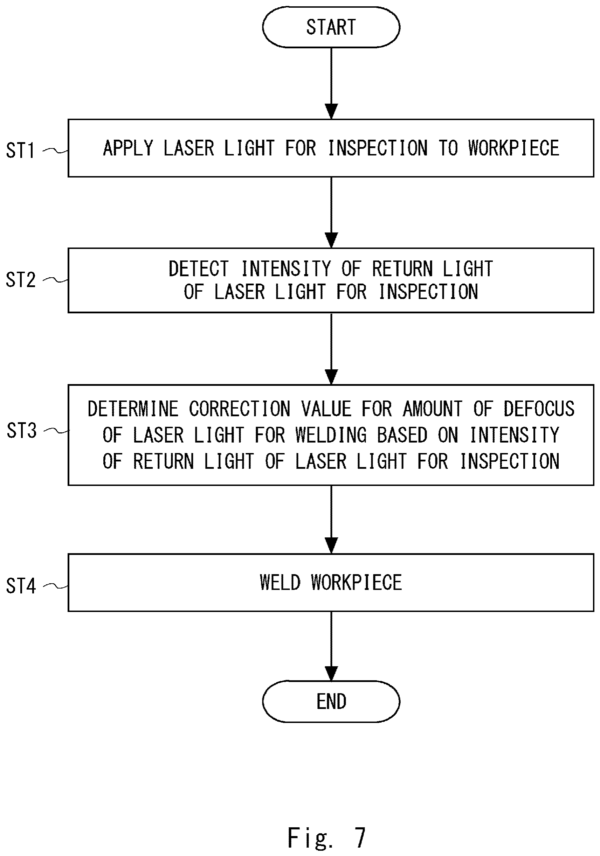

Next, operations performed by the welding system, i.e., a welding method according to the first embodiment, will be described in detail. Fig. 7 is a flowchart for explaining operations performed by the welding system according to the first embodiment.

Firstly, the laser light irradiation unit 1 applies laser light for inspection to a workpiece (Step ST1). More specifically, the laser light irradiation unit 1 applies the laser light for inspection obliquely to the workpiece while changing the amount of defocus thereof.

Further, in the step ST1, the laser light irradiation unit 1 scans the laser light for inspection in the direction approaching the emission point of the laser light for inspection at the timing at which the amount of defocus becomes zero.

Next, the return-light detection unit 13 detects the intensity of the return light of the laser light for inspection (Step ST2). The intensity of the return light detected by the return-light detection unit 13 is output to the correction-value determination unit 22.

Next, the correction-value determination unit 22 determines a correction value for the amount of defocus based on the intensity of the return light of the laser light for inspection (Step ST3). More specifically, the correction-value determination unit 22 determines the amount of defocus of the laser light for inspection at the timing at which the intensity of the return light of the laser light for inspection reaches the extreme value as the correction value for the amount of defocus.

Lastly, the laser light irradiation unit 1 welds the workpiece (Step ST4), and the welding system 100 finishes the series of operations. More specifically, the laser light irradiation unit 1 welds the workpiece by applying the laser light for welding to the workpiece so that the amount of defocus corrected by the correction value determined in the step ST3 becomes zero.

As described above, the welding system 100 according to this embodiment determines the correction value for the amount of defocus based on the intensity of the return light of the laser light for inspection which is emitted while changing the amount of defocus thereof. Further, the welding system 100 according to this embodiment scans the laser light for inspection in the direction approaching the emission point of the laser light for inspection at the timing at which the amount of defocus becomes zero.

By the above-described configuration, the welding system 100 according to this embodiment increases the amount of change in the intensity of the return light of the laser light for inspection. As a result, the welding system 100 according to this embodiment can improve the accuracy of the control of the focusing of the laser light for welding.

### (Other Embodiments)

In a welding system 100 according to another embodiment, the trajectory of the scanning of the laser light for inspection may be roughly circular. By the above-described configuration, in the vicinity of the irradiation point where the amount of defocus of the laser light for inspection becomes zero, the laser light for inspection is scanned in a direction approaching the emission point, and in the other sections, the laser light for inspection is scanned in a direction receding from the emission point. As a result, the amount of change in the intensity of the return light of the laser light for inspection increases, so that the accuracy of the control of the focusing of the laser light for welding is further improved.

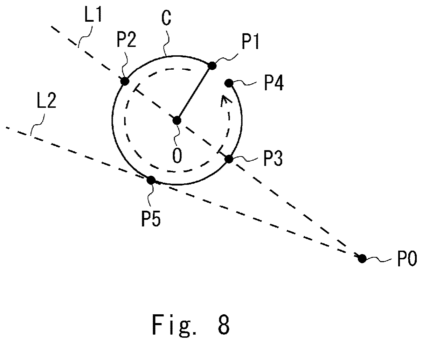

Fig. 8 is a schematic plan view showing the trajectory of the scanning of laser light for inspection according to another embodiment.

Note that in Fig. 8, a trajectory C is the trajectory of the scanning of the laser light for inspection; a point O is the center point of the trajectory C; a point P0 is the emission point of the laser light for inspection; a straight line L1 is a straight line connecting the point O and the point P0; a straight line L2 is a tangent to the trajectory C extending from the point P0; a point P1 is the start point of the irradiation of the laser light for inspection; a point P2 is an intersection between the straight line L2 and the trajectory C; a point P3 is another intersection between the straight line L2 and the trajectory C; a point P4 is the end point of the irradiation of the laser light for inspection; and a point P5 is a contact point between the trajectory C and the straight line L2.

For example, the welding system 100 according to the other embodiment starts the irradiation of the laser light for inspection from the point P1 and continuously applies the laser light for inspection up to the point P4 in a counterclockwise direction along the trajectory C.

In this case, in the section from the point P1 to the point P2 and the section from the point P3 to the point P4, the laser light for inspection is scanned in a direction receding from the emission point P0. Further, in the section from the point P2 to the point P3, the laser light for inspection is scanned in a direction approaching the emission point P0.

Therefore, in the welding system 100 according to the other embodiment, it is sufficient if the amount of defocus of the laser light for inspection becomes zero during the period in which the laser light for inspection is applied to the section from the point P2 to the point P3.

Note that the point where the amount of defocus of the laser light for inspection becomes zero may be any point in the section from the point P2 to the point P3, but it is particularly preferably in the vicinity of the point P5 at which the scanning direction of the laser light for inspection is closest to the direction toward the emission point P0.

Further, in a welding system 100 according to another embodiment, the step of applying the laser light for inspection to the workpiece, the step of determining the correction value for the amount of defocus, and the step of welding the workpiece may be performed at a plurality of points. That is, the welding system 100 according to this embodiment may perform welding at a plurality of points.

In this case, the welding system 100 according to the other embodiment may correct, in the step of applying the laser light for inspection to the workpiece that is performed a second time or after, the amount of defocus of the laser light for inspection by the correction value that is determined the last time.

The welding system 100 according to the other embodiment may change the start position of the irradiation of the laser light for inspection when the position of the point at which it is predicted that the amount of defocus of the laser light for inspection will become zero is changed by the aforementioned correction.

Further, the welding system 100 according to the other embodiment may change the scanning speed of the laser light for inspection and/or the changing rate of the amount of defocus when the position of the point at which it is predicted that the amount of defocus of the laser light for inspection will become zero is changed by the aforementioned correction.

By the above-described configuration, the step of applying the laser light for inspection to the workpiece can be performed more properly. As a result, the welding system 100 according to this embodiment can further improve the accuracy of the control of the focusing of the laser light for welding.

Although the present invention has been described above with reference to the above-described example embodiments, the present invention is not limited to the configurations of the above-described example embodiments. Needless to say, the present invention includes various modifications, corrections, and combinations that can be made by a person skilled in the art within the scope of the claims.

This application is based upon and claims the benefit of priority from Japanese patent application No. 2023-018276, filed on February 9, 2023, the disclosure of which is incorporated herein in its entirety by reference.

### Industrial Applicability

The present disclosure can be applied to various apparatuses that require the focusing of laser light.

### Reference Signs List

- 1: LASER IRRADIATION UNIT
- 11: LASER OSCILLATION UNIT
- 12: OPTICAL SYSTEM
- 13: RETURN LIGHT DETECTION UNIT
- 2: CONTROL UNIT
- 21: LASER INTENSITY CONTROL UNIT
- 22: CORRECTION VALUE DETERMINATION UNIT
- 23: DF AMOUNT CONTROL UNIT
- 24: IRRADIATION POSITION CONTROL UNIT
- 100: WELDING SYSTEM

## Claims

1. A welding method comprising:
a step of applying laser light for inspection obliquely to a workpiece while changing an amount of defocus;
a step of determining a correction value for the amount of defocus based on intensity of return light of the laser light for inspection; and
a step of welding the workpiece by applying laser light for welding to the workpiece so that the amount of defocus corrected by the correction value becomes zero, wherein
the laser light for inspection is scanned in a direction approaching an emission point of the laser light for inspection at a timing at which the amount of defocus becomes zero during the step of applying the laser light for inspection to the workpiece.

2. The welding method according to claim 1, wherein in the step of determining the correction value for the amount of defocus, the amount of defocus of the laser light for inspection obtained at a timing at which the intensity of the return light of the laser light for inspection reaches an extreme value is determined as the correction value for the amount of defocus.

3. The welding method according to claim 2, wherein in the step of determining the correction value for the amount of defocus, the amount of defocus of the laser light obtained at a timing at which the intensity of the return light of the laser light for inspection reaches a minimum value is determined as the correction value for the amount of defocus.

4. The welding method according to claim 2, wherein in the step of determining the correction value for the amount of defocus, the amount of defocus of the laser light obtained at a timing at which the intensity of the return light of the laser light for inspection reaches a maximum value is determined as the correction value for the amount of defocus.

5. The welding method according to any one of claims 1 to 4, wherein in the step of applying the laser light for inspection to the workpiece, a trajectory of the scanning of the laser light for inspection is roughly circular.

6. The welding method according to any one of claims 1 to 4, wherein
the step of applying the laser light for inspection to the workpiece, the step of determining the correction value for the amount of defocus, and the step of welding the workpiece are performed at a plurality of points, and
in the step of applying the laser light for inspection to the workpiece that is performed a second time or after, the amount of defocus of the laser light for inspection is corrected by using the correction value for the amount of defocus that is determined in the step of determining the correction value for the amount of defocus that is performed the last time.

7. A welding system comprising:
a laser light irradiation unit configured to applying laser light for inspection and laser light for welding obliquely to a workpiece;
and
a correction-value determination unit configured to determine a correction value for an amount of defocus based on intensity of return light of the laser light for inspection, in which
the laser light irradiation unit applies the laser light for inspection to the workpiece while changing the amount of defocus, scans the laser light for inspection in a direction approaching an emission point of the laser light for inspection at a timing at which the amount of defocus becomes zero, and applies laser light for welding to the workpiece so that the amount of defocus corrected by the correction value determined by the correction-value determination unit becomes zero.

8. The welding system according to claim 7, wherein the determination unit determines the amount of defocus of the laser light for inspection obtained at a timing at which the intensity of the return light of the laser light for inspection reaches an extreme value as the correction value for the amount of defocus.

9. The welding system according to claim 8, wherein the determination unit determines the amount of defocus of the laser light obtained at a timing at which the intensity of the return light of the laser light for inspection reaches a minimum value as the correction value for the amount of defocus.

10. The welding system according to claim 8, wherein the determination unit determines the amount of defocus of the laser light obtained at a timing at which the intensity of the return light of the laser light for inspection reaches a maximum value as the correction value for the amount of defocus.

11. The welding system according to any one of claims 7 to 10, wherein a trajectory of the scanning of the laser light for inspection is roughly circular.

12. The welding system according to any one of claims 7 to 10, wherein
the laser light irradiation unit welds a plurality of points, and
in welding that is performed a second time or after, the amount of defocus of the laser light for inspection is corrected by using the correction value for the amount of defocus that is determined in the last welding.

13. A method for correcting an amount of defocus, comprising:
a step of applying laser light for inspection obliquely to a workpiece while changing the amount of defocus; and
a step of determining a correction value for the amount of defocus based on intensity of return light of the laser light for inspection, wherein
in the step of applying the laser light for inspection to the workpiece, the laser light for inspection is scanned in a direction approaching an emission point of the laser light for inspection at a timing at which the amount of defocus becomes zero.
